# EUROPEAN PATENT APPLICATION

(11) **EP 3 722 086 A1**
(43) Date of publication of application: **14.10.2020**
(21) Application number: 19168974.4
(22) Date of filing: 12.04.2019
(51) Int. Cl.: B32B 5/02, B32B 5/08, B32B 27/08, B32B 27/12, B32B 27/30, B32B 27/32, B32B 27/34, B32B 27/36, B32B 27/40, B32B 7/027, B60R 21/235

(54) **MULTILAYER FILMS FOR AIRBAG APPLICATIONS**

(71) Applicant: Nitto Denko Corporation, Ibaraki-shi, Osaka 567-8680 (JP); Nitto Switzerland AG, Schmitten 3185 (CH)
(72) Inventor: YAMADA, Yosuke, Ibaraki-shi, Osaka 567-8680 (JP); TAGAMI, Toru, Ibaraki-shi, Osaka 567-8680 (JP); LUDWIG, Michael, 83064 Raubling (DE)
(74) Representative: Grünecker Patent- und Rechtsanwälte PartG mbB

(57) **Abstract**

This invention relates to a multilayer film comprising: a barrier layer, and an adhesive layer comprising a maleic anhydride (MAH)-grafted polyolefin; wherein the barrier layer has a melting point higher than the adhesive layer, and wherein the melting point of the barrier layer is higher than 165°C. The present invention enables production of gas-tight multilayer laminates which exhibit a high peel resistance combined with a low weight and/or thickness. In further embodiments, a multilayer laminate and an inflatable airbag comprising a fabric layer adhered to said multilayer film, as well as a method if its manufacturing are described.

## Description

### FIELD OF INVENTION

The invention relates to multilayer films for gastight coatings of fabrics and to multilayer laminates comprising said multilayer films. In addition, the present invention relates to methods of manufacturing said multilayer films, and an inflatable airbag comprising said multilayer laminates.

### BACKGROUND OF THE INVENTION

Incorporating airbags into vehicles in order to provide the occupants with a soft cushioning and restraint during a crash event is known practice.

The most widely used variant, namely the frontal airbag, is designed to inflate extremely rapidly then quickly deflate during a collision.

However, in the recent decades, several types of airbags have been developed which require to maintain the inflated state for prolonged periods of time. For example, curtain airbags which are disposed above doors and inflate and deploy along vehicle side windows desirably remain expanded until and during a rollover, to thereby restrain the occupant, and prevent the occupant from injuries until the crash event is concluded. It is also known to integrate airbags into a backpack to produce so-called avalanche airbags, which are intended to maintain the inflated state in order to prevent an avalanche victim from sinking below the snow cover.

In order to meet these requirements, the airbag material should exhibit high strength and suitable gas-tight properties both on the main airbag surface and at the seams formed by sewing together or adhering multiple sections of the airbag.

Simultaneously, in order to exhibit a low volume in the deflated state and to avoid unnecessary weight contribution to the vehicle, backpack or other airbag-containing article, said material is desirably lightweight and thin.

Typically, airbags exhibit a multilayer structure comprising a substrate layer which provides for the strength, such as a knitted or woven fabric, for example, onto which one or more polymer-based layers enabling the gas tightness are coated. Exemplary multilayer materials are disclosed in EP 1 518 761 A1 and US 2007/0065614 A1, for example. A simple approach to reduce both thickness and weight of the coated fabric is to decrease the amount of coating material on the fabric. In practice, however, the reduction of coating weight is highly limited due to formation of local pinholes (i.e. small uncoated areas) during or after the coating process which are detrimental to the gas tightness of the multilayer structure. In addition or alternatively, the peel strength between the coating material and the fabric tends to be lowered upon decreasing the coating weight.

It is therefore the object of the invention to provide multilayer films and laminates which overcome the above-mentioned problems and enable the provision of thin and light-weight airbags that are not prone to disintegration and exhibit sufficient strength and gas impermeability to be effectively used for applications which necessitate full deployment of the airbag for prolonged periods of time (e.g. curtain airbags and comparable applications).

In addition, it is an object of the present invention to provide multilayer films and laminates which may be produced inexpensively and allow for a wide range of processing conditions (e.g. temperature and/or pressure during lamination).

### SUMMARY OF THE INVENTION

The present invention solves these objects with the subject matter of the claims as defined herein. Further advantages of the present invention will be further explained in detail in the section below.

In general, the present invention relates to multilayer film comprising: a barrier layer, and an adhesive layer comprising a maleic anhydride (MAH)-grafted polyolefin; wherein the barrier layer has a melting point higher than the adhesive layer, and wherein the melting point of the barrier layer is higher than 165°C. The multilayer film may be used as a coating layer for synthetic fabrics with excellent peeling strength towards the fabric substrate and may be coated with a low thickness and/or coating weight without being prone to pinhole formation.

In another aspect, the present invention provides a multilayer laminate comprising a fabric layer adhered to the aforementioned multilayer film via the adhesive layer.

Other aspects of the present invention relate to an inflatable airbag comprising the aforementioned multilayer laminate and to the use of the aforementioned multilayer film for the gas-tight coating of a woven or knitted fabric.

Preferred embodiments of, as well as other aspects of the present invention are described in the following description and the claims.

### BRIEF DESCRIPTION OF THE DRAWINGS

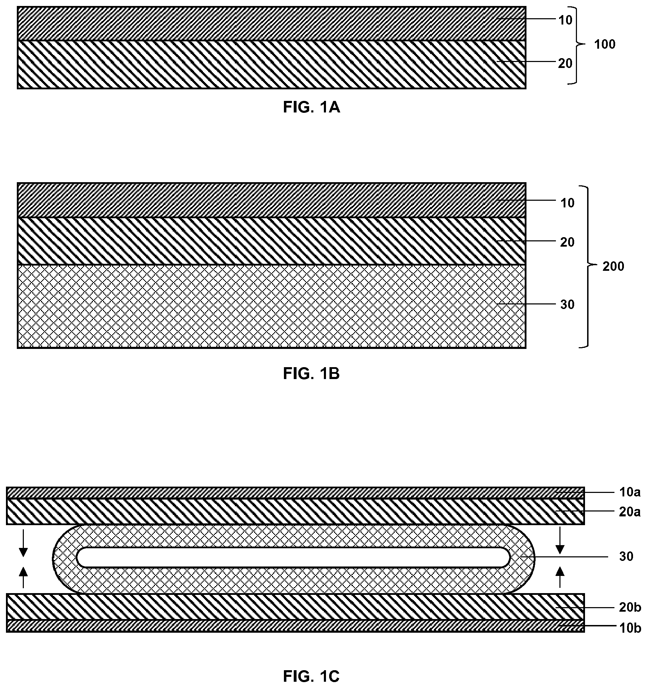

FIG. 1A illustrates a two-layer multilayer film in accordance to an embodiment of the present invention.
FIG. 1B shows a multilayer laminate according to an embodiment of the present invention.
FIG. 1C illustrates an exemplary process of coating a one-piece fabric on both sides with a multilayer film according to the present invention.

### DETAILED DESCRIPTION OF THE INVENTION

For a more complete understanding of the present invention, reference is now made to the following description of the illustrative embodiments thereof:

### Multilaver Film

In a first embodiment, the present invention generally relates to a multilayer film comprising: a barrier layer, and an adhesive layer comprising a maleic anhydride (MAH)-grafted polyolefin; wherein the barrier layer has a melting point higher than the adhesive layer, and wherein the melting point of the barrier layer is higher than 165°C.

MAH-grafted polyolefins may typically exhibit melting points within a broad temperature range. However, the lamination process imposes restrictions on the compatibility of the MAH-grafted polyolefins with the barrier layer material as there may be a narrow processing window (in terms of temperature or lamination pressure, for example) within which a high quality laminate may be obtained. By selecting the barrier layer so that its melting temperature is higher than 165°C, the lamination processing window may be widened and a broad range of MAH-grafted polyolefins may be employed for the adhesive layer without compromising on the quality of the laminate.

As illustrated in Fig. 1, the multilayer film (100) according to the present embodiment has at least a two-layer structure comprising a barrier layer (10) and an adhesive layer (20). Accordingly, by using the multilayer film as a coating for fabric or net substrates, adhesion to the substrate and gas tightness may be improved compared to single-layer coatings since there is no need to balance the gas barrier and adhesion properties. The barrier layer (10) is generally characterized in that it prevents gas from flowing in and out of the layer. The adhesive layer (20) is a layer which shows adhesiveness to a fabric or net-type substrate. Typically, this adhesiveness is exhibited by softening or melting under predetermined conditions, for example, under conditions of increased temperature and/or pressure.

The adhesive layer used in the present invention essentially comprises at least one maleic anhydride (MAH)-grafted polyolefin. The terms "maleic anhydride (MAH)-grafted polyolefin" and "MAH-grafted polyolefin", as used herein, denote olefin-based homo- or copolymers grafted with maleic anhydride. MAH-grafted polyolefins may be synthesized by methods known by the skilled artisan, including radical polymerization, for example.

While not being limited thereto, the MAH-grafted polyolefin is preferably based on a polymer or co-polymer of C₂-C₂₀ olefins. In further preferred embodiments, the MAH-grafted polyolefin is selected from MAH-grafted polyethylene, MAH-grafted polypropylene, or copolymers thereof.

While not being limited thereto, suitable base polymers for MAH-grafted polyethylene and its copolymers include high density polyethylene (HDPE), low density polyethylene (LDPE), linear low density polyethylene (LLDPE), very low density polyethylene (VDLPE), ultra low density polyethylene (ULDPE), linear ethylene/α-olefin interpolymers, substantially linear ethylene/α-olefin interpolymers, or olefin multi-block interpolymers. Especially preferred base polymers include LDPE, LLDPE, VDLPE (having a density of between 0.89 to 0.914 g/cm³) and ULDPE (having a density of less than 0.89 g/cm³). The term "interpolymer", as used herein, comprises any polymer having more than one polymerized monomer, including copolymers and terpolymers. While not being limited thereto, preferred co-monomers to be polymerized with ethylene include C₃-C₂₀ α-olefins, more preferably C₃-C₁₀ α-olefins, and especially preferably propylene, 1-butene, 1-pentene, 1-hexene, 4-methyl-1-pentene, 1-heptene and 1-octene. Further preferred co-monomers include propylene, 1-butene, 1-hexene and 1-octene. Commercially available examples of suitable ethylene-based interpolymers include ENGAGE™, ATTANE™, AFFINITY™, DOWLEX™, ELITE™, all available from The Dow Chemical Company; EXCEED™ and EXACT™ available from Exxon Chemical Company;; and MAH-grafted PE from the OREVAC™ series, available from Arkema, S.A.. ADMER™ polymers available from the Mitsui Chemical Company.

Suitable base polymers for maleic anhydride (MAH)-grafted polyolefins also include polypropylene homopolymers and propylene copolymers, and other olefin-based polymers, such as those formed from one or more C₄-C₂₀ alpha-olefins. Commercially available examples of MAH-grafted polypropylene include MAH-grafted PP from the OREVAC™ series, available from Arkema, S.A. The olefin-based polymers may optionally contain copolymerizable conjugated dienes, non-conjugated dienes and/or vinyl monomers. In a preferred embodiment of the invention, a propylene-based interpolymer is used as the base polymer in the grafting reaction. Preferred comonomers include, but are not limited to, ethylene, isobutylene, 1-butene, 1-pentene, 1-hexene, 3-methyl-1-pentene, 4-methyl-1-pentene, 1-octene, non-conjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Preferably, the comonomer is an ethylene or a C₄-C₂₀ α-olefin. Further preferred comonomers include ethylene, 1-butene, 1-pentene, 1-hexene, 1-heptene and 1-octene, and more preferably include ethylene, 1-butene, 1-hexene and 1-octene.

In further preferred embodiments, the adhesive layer used in the present invention comprises a blend of MAH-grafted polyolefin and a non-MAH-modified polyolefin. In this case, the MAH-grafted polyolefin is preferably selected from MAH-grafted polyethylene, MAH-grafted polypropylene, or copolymers thereof; and the non-MAH-modified polyolefin is preferably selected from polyethylene or polypropylene. While not being limited thereto, suitable non-MAH-modified polyolefins include high density polyethylene (HDPE), low density polyethylene (LDPE), linear low density polyethylene (LLDPE), very low density polyethylene (VDLPE), ultra low density polyethylene (ULDPE), linear ethylene/α-olefin interpolymers, substantially linear ethylene/α-olefin interpolymers, or olefin multi-block interpolymers. Especially preferred base polymers include LDPE, LLDPE, VDLPE (having a density of between 0.89 to 0.914 g/cm³) and ULDPE (having a density of less than 0.89 g/cm³). Commercially available examples of corresponding PE-blends include PLEXAR™ PX3227, available from LyondellBasell, Inc., and MAH-modified polyolefins from the AMPLIFY™ series, available from The Dow Chemical Company.

While not being limited thereto, the maleic anhydride (MAH)-grafted polyolefin preferably comprises 0.1 to 2.0 wt.-% MAH, further preferably between 0.25 to 1.5 wt.-% MAH, each based on the total weight of the maleic anhydride (MAH)-grafted polyolefin.

In the multilayer film of the present invention, the content of the maleic anhydride (MAH)-grafted polyolefin (or the total content of MAH-grafted polyolefin and non-MAH-modified polyolefin, if the latter is present) in the adhesive layer preferably ranges from 10 to 100 wt.-% based on the total weight of the adhesive layer.

In a preferred embodiment from the viewpoint of increasing the peel strength of the adhesive layer towards the fabric or web substrate, the adhesive layer comprises - in addition to the MAH-grafted polyolefin - an α-olefin copolymer, preferably an elastomeric α-olefin copolymer comprising a C₃-C₁₂ alkene. While not being limited thereto, said α-olefin copolymer is preferably not grafted with MAH. The presence of branched polymer chains established by α-olefin copolymers promotes entanglement between side chains and van der Waals interaction with the substrate material, improves the tackiness of the adhesive layer towards the substrate, and thus increases the peel strength and provides the multilayer film with softness and rubber-like properties. Preferred examples of α-olefin copolymers include, but are not limited to copolymers of ethylene and linear or branched C₃-C₁₂ α-olefins, such as propene, 1-butene, isobutylene, 1-pentene, and 1-octene, for example.

In presence of an α-olefin copolymer, the content of the maleic anhydride (MAH)-grafted polyolefin (or the total content of MAH-grafted polyolefin and non-MAH-modified polyolefin, if the latter is present) in the adhesive layer preferably ranges from 10 to 99 wt.-%, further preferably from 25 to 80 wt.-%, and the content of the α-olefin copolymer preferably ranges from 1 to 90 wt.-%, preferably from 20 to 75 wt.-%, based on the total weight of the adhesive layer, in order to provide for excellent flexibility and elasticity while retaining sufficient mechanical strength.

In a preferred embodiment, the adhesive layer further comprises a polymer having a Shore D hardness according to ISO 868 of less than 80, such as from 30 to 80, or from 35 to 75. While not being limited thereto, such polymers may be selected from polyolefins or thermoplastic elastomers, for example. Examples of suitable polyolefins include, but are not limited to polyethylene and polypropylene. Suitable thermoplastic elastomers (TPEs) include, but are not limited to, olefin-based TPEs (e.g. PP/EPDM), styrene block copolymers (including, but not limited to styrene-butadiene-styrene (SBS), styrene-isoprene-styrene (SIS), styrene-isoprene/butadiene-styrene (SIBS), styrene-ethylene/butylene-styrene (SEBS), styrene-ethylene/propylene (SEP), and styrene-ethylene/propylene-styrene (SEPS)), co-polyester-based thermoplastic elastomers (TPC), urethane-based thermoplastic elastomers (TPU), or polyamide-based thermoplastic elastomers (TPA), for example. In preferred embodiments, the polymer having a Shore D hardness in the above-identified range is comprised at a content of from 0.5 to 40 wt.-%, further preferably at a content of from 1 to 30 wt.-%, based on the total weight of the adhesive layer.

In preferred embodiments, the thickness of the adhesive layer is in the range of 2 to 45 µm, further preferably in the range of 2 to 20 µm, and especially preferably in the range of 2 to 15 µm.

The surface density of the adhesive layer is preferably in the range of from 5 to 50 g/m², more preferably from 15 to 45 g/m², especially preferably from 20 to 35 g/m².

As has been mentioned above, the barrier layer has the function of preventing gas from flowing in and out of the layer.

According to the present invention, the melting point of the barrier layer is higher than the melting point of the adhesive layer and higher than 165°C. Therefore, when the multilayer film is bonded to the base layer on the adhesive layer side by heating at a temperature lower than the melting point of the barrier layer, the adhesive layer is suitable for bonding to the fabric- or net-type substrate while suppressing softening of the material constituting the barrier layer. Thereby, reliable adhesive function of the adhesive layer is ensured. It is further preferred that the difference between the melting points of the barrier layer and that of the maleic anhydride (MAH)-grafted polyolefin is at least 35°C, whereupon the generation of pinholes upon lamination as a thin layer onto the fabric or net substrate may be effectively prevented. Hence, high peeling strength and maintenance of the gas barrier properties in the resulting multilayer laminate may be simultaneously achieved, even upon use of small coating amounts. In addition, when being used or stored for a long time or in a high temperature and high humidity environment, a high flexibility and resistance towards delamination may be maintained.

As set out above, the melting point of the barrier layer is higher than 165°C, preferably at least 168°C. In a further preferred embodiment, the melting point of the barrier layer is 170°C or more, more preferably 180°C or more, especially preferably between 190°C and 300°C, such as from 195°C to 270°C. In another preferred embodiment, the difference between the melting point of the barrier layer and the melting point of the adhesive layer is preferably in the range of from 10 to 100 °C, further preferably in the range of 20 to 80°C. In general, the melting point or temperature may be determined by methods known in the art, such as according to ISO 11357-1/-3. When bonding the multilayer film to the fabric or net substrate by heating and pressing by setting the difference between the melting point and the melting point to the above ranges, the control of the lamination temperature during bonding is facilitated.

From the viewpoint of a melting point in the above-identified range, favourable low-temperature impact strength, scrub resistance, enhanced flexibility and softness, the barrier layer comprises a thermoplastic polyester elastomer or a polyamide copolymer.

Further preference is given to copolyester elastomer materials, copolyamide elastomer materials, or polyamide elastomer materials, in each case having a combination of polymer blocks composed of nylon-6, nylon-6,6, nylon-11, nylon-12, nylon-6,6,12 or a mixture of these with polymer blocks composed of polyethylene glycol, polypropylene glycol, polytetrahydrofuran, polyether or a mixture of these.

Commercially available examples of copolyesters include thermoplastic polyester elastomers from the HYTREL™ series, available from DowDuPont, Inc., from the MODIC™ series, available from Mitsubishi Chemical Co. and from the ARNITEL® series, available from DSM Engineering Plastics B.V.. Commercially available examples of polyamides and copolyamides include the UBE Nylon series, available from Ube Industries, Ltd., the VESTAMID® series, available from Evonik AG, and the PEBAX® series from Arkema, S.A..

In preferred embodiments, the thickness of the barrier layer is in the range of 2 to 30 µm, further preferably in the range of 2 to 20 µm, and especially preferably in the range of 2 to 15 µm.

The surface density of the barrier layer is preferably in the range of from 2 to 20 g/m², more preferably from 5 to 15 g/m².

The barrier layer and the adhesive layer may independently further include conventional additives known in the art, such as antioxidants, coloring agents, flame retardants, lubricants, stabilizers or anti-blocking agents (e.g. silica-based anti-blocking additives), for example. Such additives are preferably added at a total content of up to 10 wt.-% per total weight of each layer, preferably between 0.1 to 8 wt.-%, to improve the processability, stability or other properties of the layer materials.

It is understood that the multilayer film according to the present invention may include one or more further layers in addition to the adhesive layer and the barrier layer, such as a tie layer or a recycle layer between the barrier layer and adhesive layer, for example. In addition, each of the adhesive and barrier layers may be composed of multiple sub-layers. In some embodiments, however, the multilayer film may consist of single films of above-described barrier layer and adhesive layer.

In general, it is preferred that the total thickness of the multilayer film is in the range of 5 to 80 µm, especially preferably in the range of 10 to 75 µm.

### Multilaver Laminate

In a second embodiment, illustrated in Fig. 1B, the present invention relates to a multilayer laminate (200) comprising a fabric layer (30) adhered to a multilayer film according to the above-described first embodiment via the adhesive layer (20). Accordingly, the adhesive layer (20) may be laminated directly to the fabric layer (30) to form the multilayer laminate (200).

Unless defined otherwise, the term "fabric layer", as used herein, denotes a layer of net or fabric made of woven or knitted, synthetic fibers, natural fibers, regenerated fibers, semi-synthetic fibers, inorganic fibers, and combinations thereof (including blended yarns and mixed weaves). Among them, woven fabrics may be preferable when aiming higher mechanical strength.

In preferred embodiments, the fabric layer is made of synthetic fibers, of which those comprising (co-)polymers based on polyamide (e.g. nylon, aramide), polyester (e.g. polybutylene terephthalate (PBT), polyethylene terephthalate (PET)), polysulfone, polyether ketone (e.g. PEEK) and/or polyolefin (e.g. polyethylene, polypropylene) are further preferred. Due to formation of firm polar bonds to the maleic anhydride groups present in the MAH-grafted polyolefin contained in the adhesive layer, especially improved adhesion properties between the multilayer film and the fabric layer are attained by selecting the fiber layer material from polymers comprising heteroatomic groups. Preferred examples thereof include, but are not limited to polyamides, polyesters, rayon, polyether ketones, polysulfones and derivatives thereof. Polyamides and polyesters are especially preferred.

The thickness of the fabric layer is not particularly limited and may be suitably selected by the skilled artisan depending on the use of the resulting multilayer laminate and the selected fabric material. For instance, for airbag applications, typical thicknesses of fabric layers are in the range of between is 0.05 mm to 0.50 mm, such as from 0.1 to 0.40 mm.

### Airbag

In a third embodiment, the present invention relates to an inflatable airbag comprising the multilayer laminate according to the second embodiment.

While not being limited thereto, the airbag may be a frontal airbag, side airbag, knee airbag, curtain airbag, seat cushion airbag, center airbag, external airbag, seat belt airbag, pedestrian airbag, motorcycle airbag (which may be integrated into a vests or into the motorcycle), bicycle airbag (e.g. collar-type airbag), avalanche airbag (e.g. backpack-integrated) and the like. Despite of the light weight and thinness of the multilayer film used in the multilayer laminate, the resulting airbags are resistant to disintegration and exhibit sufficient strength and gas impermeability to be effectively used either as conventional vehicle airbags to reduce weight and volume in the deflated state, or as airbags which necessitate full deployment for prolonged periods of time (e.g. curtain airbags, avalanche airbags, motorcycle or bicycle airbags).

Accordingly, the geometry of the airbags, the type of seams and the sealing process is not limited and may be appropriately selected from those known in the art. For instance, the inflatable airbag may be produced as a one-piece woven airbag (OPW) without seams (according to DE 102 24 771 A1, for example) or by joining multiple cut-to-size pieces of multilayer laminates, which may be optionally suitably folded before joining (according to US 2010/0320736 A1 or US 2014/0014253 A1, for example). Typically, OPWs used for curtain airbags exhibit a complex curved surface in which a plurality of rooms are formed, and may have an uneven structure in the inflated state, which is particularly prone to peeling between the fabric layer and the multilayer film. However, by using the multilayer film according to the first embodiment, the multilayer film can be firmly adhered even to such irregular surfaces and delamination can be effectively prevented.

The airbag may be incorporated into passive restraint systems and airbag assemblies known in the art, which typically comprise an airbag control unit (ACU) that monitors one or more related sensor(s) (including accelerometers, impact sensors, side (door) pressure sensors, wheel speed sensors, gyroscopes, brake pressure sensors, and seat occupancy sensors, for example) and triggers a gas generator unit when the sensor(s) measure a value reaching or exceeding a predetermined threshold.

### Methods of Fabrication and Uses

In a fourth embodiment, the present invention relates to a method of manufacturing a multilayer laminate for an airbag, comprising the steps of: providing a multilayer film according to the first embodiment, and bonding the multilayer film to a fabric layer.

Multilayer films according to the first embodiment can be formed using techniques known to those of skill in the art. For instance, for those layers that can be coextruded, such layers can be coextruded as blown films or cast films using techniques known to those of skill in the art in a single extrusion step. Alternatively, the multilayer films can be produced by forming the adhesive layer and the barrier layer in advance as separate sheets or films by extrusion, for example, followed by bonding and integrating the sheets or films with each other. For example, the respective sheets or films may be superposed and melt-pressed by a heat press or a heat roll.

The thus produced multilayer film is then bonded to a fabric layer, such as a fabric layer described above in the context of the second embodiment. Bonding may be achieved by a lamination step, wherein the multilayer film is provided on the fabric layer and heated to a temperature below the melting point of the barrier layer (e.g. during or after being provided on the fabric layer).

The resulting multilayer laminate obtained by laminating the multilayer film and the fabric layer exhibits a sheet-like structure, which may include, in addition to a planar shape, a cylindrical, bag-like, and balloon-like shape.

In an exemplary embodiment illustrated in Fig. 1C, two identical or different multilayer films according to the first embodiment of the present invention may be simultaneously bonded to opposed surfaces of a cylindrical, bag-like or balloon-like shaped fabric layer (30), so that the adhesive layers (20a) and (20b) contact and adhere to each other at the seams (as indicated by the arrows in Fig. 1C).

While not being limited thereto, suitable techniques and apparatuses for bonding the multilayer film to the fabric layer are disclosed in WO 2018/230721 A1, US 2007/0065614 A1, and EP 1 967 422 A1, for example.

In a fifth embodiment, the present invention relates to the use of the multilayer film according to the first embodiment for the gas-tight coating of a woven or knitted fabric or net. In this respect, the multilayer film is thin, light-weight, and substantially impermeable to gas and can therefore preferably be used as a coating of a wide range of textiles, for the production of airbags, sails, and garments.

It will be understood that the preferred features of the first embodiment to fifth embodiments may be freely combined with each other in any combination, except for combinations where at least some of the features are mutually exclusive.

### EXAMPLES

Blown-film extrusion was used to separately produce barrier layer films with weights per unit area of 10 g/cm² and adhesive layer films with weights per unit area of 30 g/cm² (cf. Examples 1, 2, 4, 7-10, and 13-16) or 25 g/cm² (cf. Examples 3, 5, 6, 11, 12, 17 and 18; and Comparative Examples 1 to 4) using the compositions shown in Table 1, in accordance to the method disclosed in US 2007/0065614 A1.

The reagents used and their abbreviations in Table 1 are explained in the following:
Polymer A: Arnitel®-TPC (thermoplastic copolyester elastomer with a melting temperature of ≥ 180°C, commercially available from DSM Engineering Plastics)
Polymer B: UBE Nylon (nylon 6,6,12 terpolymer with a melting temperature of 188 °C, commercially available from Ube Industries, Ltd.
Polymer C: Adstif™ Polypropylene (high crystallinity polypropylene with a melting temperature of 165°C, commercially available from LyondellBasell).
MAH-polyolefin 1: Plexar™ Tie layer resin (maleic anhydride-modified linear low density polyethylene plastomer with a melting temperature of 124°C, commercially available from LyondellBasell).
MAH-polyolefin 2: Admer™ Adhesion resin (maleic anhydride grafted co-polypropylene with a melting temperature of 147°C, commercially avaliable from Mitsui Chemicals, Inc.)
α-olefin copolymer 1: Queo™ Plastomer (ethylene based octene-1 plastomer with a melting temperature of 73°C, commercially available from Borealis)
α-olefin copolymer 2: Tafmer™ elastomer (propylene-based α-olefin copolymer with a melting point of 160°C, commercially avaliable from Mitsui Chemicals, Inc.)
Polymer w. Shore D < 80: Septon™ elastomer (styrene-ethylene-propylene-styrene (SEPS) thermoplastic elastomer with a Shore A hardness of 36, commercially available from Kuraray Co., Ltd.).

The individual films were laminated together in a Meyer twin-belt flat lamination system (KFK-S 400 700) to provide 2-layer films using a laminating temperature of 175°C, a layer thickness set to 0 mm, a level (height adjustment of upper pressure roll) of 0 mm, an exerted pressure of 18 N/cm², and a lamination speed 1 m/min.

The resultant 2-layer films were laminated on the Meyer twin-belt lamination system to a polyethylene terephthalate (PET) fabric (Examples 1-6 and 13-17 and Comparative Examples 1 and 2) or a polyamide textile (Examples 7-12 and 18 and Comparative Examples 3 and 4) composed of high-strength yarn (OPW, Berger Safety Textiles).

The process conditions for lamination of the multilayer film to the fabric involved a laminating temperature set 20°C higher than the melting point of each adhesive layer, a layer thickness set to 0 mm, a level (height adjustment of upper pressure roll) of 0 mm, an exerted pressure of 18 N/cm², and a lamination speed 1.6 m/min.

After production, the samples were subjected to peel strength measurements. For this purpose, a backing layer was provided on the multilayer film so as to prevent film elongation during peeling, and each pair of laminates was clamped into a tensile testing machine, and the peel force between the multilayer film and the PET or PA fabric layer was measured for each of the examples at room temperature and at 100 mm/min. In addition, the surfaces of the barrier layers were microscopically examined for pinholes. The results of these measurements are shown in Table 1.

The comparison between Examples 1-20 and Comparative Examples 2 and 4 demonstrates that multilayer laminates according to the present invention, wherein the melting points of the barrier layers are higher than 165°C, are especially resistant toward pinhole formation. On the other hand, the multilayer laminates of Comparative Examples 1 and 3, the adhesive layers of which do not comprise a maleic anhydride (MAH)-grafted polyolefin, exhibit a lower peel strength. A particularly favourable peel resistance is achieved by Examples 1 to 18, the adhesive layers of which comprise MAH-grafted polyolefins in combination with α-olefin copolymers.

**TABLE 1**

| No. | Barrier Layer | | | | | Adhesive Layer | | | | | | Substrate | Peel Force vs. Substrate [N/mm] | Pinhole Observation |
|---|---|---|---|---|---|---|---|---|---|---|---|---|---|---|
| | Formulation | | | | Surface Density [g/m²] | Formulation | | | | | Surface Density [g/m²] | | | |
| | Polymer A [wt.-%] | Polymer B [wt.-%] | Polymer C [wt.-%] | Anti-blocking agent [wt.-%] | | MAH-polyolefin 1 [wt.-%] | MAH-polyolefin 2 [wt.-%] | α-olefin copolymer 1 [wt.-%] | α-olefin copolymer 2 [wt.-%] | Polymer w. Shore D < 80 [wt.-%] | | | | |
| Example 1 | 97 | - | - | 3 | 10 | 70 | - | 30 | - | - | 30 | PET | 0.4 | no |
| Example 2 | 97 | - | - | 3 | 10 | 50 | - | 50 | - | - | 30 | PET | 0.5 | no |
| Example 3 | 97 | - | - | 3 | 10 | 30 | - | 70 | - | - | 25 | PET | 0.4 | no |
| Example 4 | - | 97 | - | 3 | 10 | 70 | - | 30 | - | - | 30 | PET | 0.4 | no |
| Example 5 | - | 97 | - | 3 | 10 | 50 | - | 50 | - | - | 25 | PET | 0.6 | no |
| Example 6 | - | 97 | - | 3 | 10 | 30 | - | 70 | - | - | 25 | PET | 0.4 | no |
| Example 7 | 97 | - | - | 3 | 10 | 70 | - | 30 | - | - | 30 | PA | 0.6 | no |
| Example 8 | 97 | - | - | 3 | 10 | 50 | - | 50 | - | - | 30 | PA | 0.6 | no |
| Example 9 | 97 | - | - | 3 | 10 | 30 | - | 70 | - | - | 30 | PA | 0.5 | no |
| Example 10 | - | 97 | - | 3 | 10 | 70 | - | 30 | - | - | 30 | PA | 0.4 | no |
| Example 11 | - | 97 | - | 3 | 10 | 50 | - | 50 | - | - | 25 | PA | 0.6 | no |
| Example 12 | - | 97 | - | 3 | 10 | 30 | - | 70 | - | - | 25 | PA | 0.5 | no |
| Example 13 | - | 97 | - | 3 | 10 | - | 50 | - | 50 | - | 30 | PET | 0.4 | no |
| Example 14 | - | 97 | - | 3 | 10 | - | 50 | 25 | 25 | - | 30 | PET | 0.4 | no |
| Example 15 | - | 97 | - | 3 | 10 | - | 50 | - | 30 | 20 | 30 | PET | 0.5 | no |
| Example 16 | - | 97 | - | 3 | 10 | - | 50 | - | 50 | - | 30 | PA | 0.4 | no |
| Example 17 | - | 97 | - | 3 | 10 | - | 50 | 25 | 25 | - | 30 | PA | 0.4 | no |
| Example 18 | - | 97 | - | 3 | 10 | - | 50 | - | 30 | 20 | 30 | PA | 0.3 | no |
| Example 19 | 97 | - | - | 3 | 10 | 100 | - | - | - | - | 25 | PET | 0.3 | no |
| Example 20 | 97 | - | - | 3 | 10 | 100 | - | - | - | - | 25 | PA | 0.3 | no |
| Comparative Example 1 | 97 | - | - | 3 | 10 | - | - | 100 | - | - | 25 | PET | 0.2 | no |
| Comparative Example 2 | - | - | 100 | - | 10 | 50 | - | 50 | - | - | 25 | PET | 0.6 | yes |
| Comparative Example 3 | 97 | - | - | 3 | 10 | - | - | 100 | - | - | 25 | PA | 0.2 | no |
| Comparative Example 4 | - | - | 100 | - | 10 | 50 | - | 50 | - | - | 25 | PA | 0.6 | yes |

Accordingly, the present invention can provide multilayer laminates which are resistant to the formation of local pinholes and ensure both a high gas tightness of the multilayer structure and sufficient peel strength between the coating material and the fabric even when using small coating weight and/or very thin coating films.

Once given the above disclosure, many other features, modifications, and improvements will become apparent to the skilled artisan.

### REFERENCE NUMERALS

- 10, 10a:: barrier layer
- 20, 20a:: adhesive layer
- 30:: fabric layer
- 100:: multilayer film
- 200:: multilayer laminate

## Claims

1. A multilayer film comprising:
a barrier layer, and
an adhesive layer comprising a maleic anhydride (MAH)-grafted polyolefin;
wherein the barrier layer has a melting point higher than the adhesive layer, and wherein the melting point of the barrier layer is higher than 165°C.

2. The multilayer film according to claim 1, wherein the maleic anhydride (MAH)-grafted polyolefin is selected from MAH-grafted polyethylene, MAH-grafted polypropylene, or copolymers thereof.

3. The multilayerfilm according to any of claims 1 or 2, wherein the maleic anhydride (MAH)-grafted polyolefin comprises 0.1 to 2.0 wt.-% MAH, based on the total weight of the maleic anhydride (MAH)-grafted polyolefin.

4. The multilayer film according to any of claims 1 to 3, wherein the adhesive layer further comprises an α-olefin copolymer, preferably an α-olefin copolymer comprising a C₃-C₁₂ alkene.

5. The multilayer film according to claim 4, wherein in the adhesive layer, the content of the maleic anhydride (MAH)-grafted polyolefin ranges from 10 to 99 wt.-% and the content of the α-olefin copolymer ranges from 1 to 90 wt.-%, based on the total weight of the adhesive layer.

6. The multilayer film according to any of claims 1 to 5, wherein the adhesive layer further comprises a polymer having a Shore D hardness according to ISO 868 of less than 80.

7. The multilayer film according to claim 6, wherein the polymer is selected from polyolefins or thermoplastic elastomers, preferably from any of polyethylene, polypropylene, or styrene block copolymers.

8. The multilayer film according to any of claims 1 to 7, wherein the barrier layer comprises a thermoplastic polyester elastomer or a polyamide copolymer.

9. The multilayer film according to any of claims 1 to 8, wherein the thickness of the adhesive layer is in the range of 2 to 45 µm, wherein the thickness of the barrier layer is in the range of 2 to 30 µm; and/or wherein the total thickness of the multilayer film is in the range of 10 to 75 µm.

10. The multilayer film according to any of claims 1 to 9, wherein the surface density of the adhesive layer is in the range of from 5 to 50 g/m², preferably from 15 to 45 g/m², and the surface density of the barrier layer is in the range of from 2 to 20 g/m², preferably from 5 to 15 g/m².

11. A multilayer laminate comprising a fabric layer adhered to a multilayer film according to any of claims 1 to 10 via the adhesive layer.

12. The multilayer laminate according to claim 11, wherein the fabric layer comprises a polyamide, polyester and/or a polyolefin.

13. An inflatable airbag comprising the multilayer laminate according to claims 11 or 12.

14. Method of manufacturing a multilayer laminate for an airbag, comprising the steps of:
providing a multilayer film according to any of claims 1 to 10, and
bonding the multilayer film to a fabric layer.

15. Use of the multilayer film according to any of claims 1 to 10 for the gas-tight coating of a woven or knitted fabric.
